(19) Europäisches Patentamt / European Patent Office / Office européen des brevets

(11) **EP 0 955 527 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(51) Int Cl.:
*G01F 23/00* *(2006.01)*    *G01F 23/284* *(2006.01)*

(21) Anmeldenummer: **98108121.9**

(22) Anmeldetag: **05.05.1998**

(54) **Mit Mikrowellen arbeitendes Füllstandsmessgerät**

Microwave level detector

Détecteur de niveau à micro-ondes

(84) Benannte Vertragsstaaten:
**DE FR GB IT**

(43) Veröffentlichungstag der Anmeldung:
**10.11.1999 Patentblatt 1999/45**

(73) Patentinhaber: **Endress + Hauser GmbH + Co. KG 79689 Maulburg (DE)**

(72) Erfinder:
• **Lalla, Robert 79541 Lörrach (DE)**
• **Müller, Roland 79585 Steinen (DE)**

• **Strütt, Bernd 79585 Steinen (DE)**

(56) Entgegenhaltungen:
**DE-A- 3 107 444**

• **LANG H ET AL: "SMART TRANSMITTER USING MICROWAVE PULSES TO MEASURE THE LEVEL OF LIQUIDS AND SOLIDS IN PROCESS APPLICATIONS" ADVANCES IN INSTRUMENTATION AND CONTROL, Bd. 48, Nr. 2, 1. Januar 1993 (1993-01-01), Seiten 731-742, XP000435380**

**Beschreibung**

Die Erfindung betrifft mit Mikrowellen arbeitende Füllstandsmeßgeräte. Derartige berührungslos arbeitende Meßgeräte werden in einer Vielzahl von Industriezweigen eingesetzt. Bei einer Vielzahl von Anwendungen, z.B. in der Ölindustrie ist eine hochgenaue Messung, z.B. auf einen Millimeter genau, erforderlich.

Bei der Füllstandsmessung werden Mikrowellen mittels einer Antenne zur Oberfläche eines Füllguts gesendet und ein an der Oberfläche reflektiertes Echosignal empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgutoberfläche und der Antenne bestimmt.

Ein Verfahren zur Messung von Entfernungen mittels reflektierter Mikrowellen ist das Pulsradar. Beim Pulsradar werden periodisch kurze Mikrowellenpulse gesendet, die von der Füllgutoberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

In der DE-A 31 07 444 ist ein mit Mikrowellen arbeitendes Füllstandsmeßgerät beschrieben welches umfaßt:

- einen Sendeimpuls-Generator zur Erzeugung von Mikrowellen-Pulsen mit einer Sende-Wiederholrate $f_s$, die im Betrieb mittels einer Antenne in Richtung eines zu messenden Füllstandes gesendet, an einer Füllgutoberfläche reflektiert und deren Echosignal empfangen wird,

- einen Referenzimpuls-Generator zur Erzeugung von Mikrowellen-Pulsen, die identisch zu den vom Sendeimpuls-Generator erzeugten Mikrowellen-Pulsen sind, jedoch eine Referenz-Wiederholrate $f_r$ aufweisen, die um eine geringe Frequenzdifferenz von der Sende-Wiederholrate $f_s$ verschieden ist,

- einen ersten Mischer,

    -- an dessen erstem Eingang ein Ausgangssignal des Referenzimpuls-Generators anliegt,
    -- an dessen zweitem Eingang das Echosignal anliegt und
    -- an dessen Ausgang ein gegenüber dem Echosignal zeitlich um einen Zeitdehnungsfaktor, der gleich einem Quotient aus Sende-Wiederholrate und Frequenzdifferenz ist, gedehntes Zwischenfrequenzsignal anliegt.

Das Zwischenfrequenzsignal hat den gleichen Verlauf wie das Echosignal, ist jedoch um den Zeitdehnungsfaktor gegenüber dem Echosignal gestreckt. Bei einer Sende-Wiederholrate von einigen Megahertz, einer Frequenzdifferenz von z.B. 10 Hz bis 100 Hz und einer Mikrowellenfrequenz von einigen Gigahertz liegt die Frequenz des Zwischenfrequenzsignal unterhalb 100 kHz.

Hierdurch ist der Einsatz sehr viel langsamerer und auch kostengünstigerer Bauteile zur Signalaufnahme und/oder Signalauswertung ermöglicht.

Üblicherweise wird das Zwischenfrequenzsignal demoduliert und abgetastet und aus den Abtastwerten eine Hüllkurve erstellt, die in einem Speicher abgelegt wird, wo sie zur weiteren Verarbeitung zur Verfügung steht. Die Hüllkurve weist typischerweise ein Maximum auf, das durch die Reflexion des Mikrowellenpulses an der Füllgutoberfläche bedingt ist. Aus dem zeitlichen Abstand zwischen einem Referenzzeitpunkt und dem Maximum des Zwischenfrequenzsignal und dem Zeitdehnungsfaktor ist die tatsächliche Laufzeit des Mikrowellenpulses zur Füllgutoberfläche und zurück bestimmbar. Diese tatsächliche Laufzeit ist ein Maß für die Entfernung von der Füllgutoberfläche zum Füllstandsmeßgerät.

Zwischen der zeitlichen Differenz $\Delta T$ zwischen zwei Punkten des Zwischenfrequenzsignals und der tatsächli-chen zeitlichen Differenz $\Delta t$ zwischen den zugehörigen Punkten des Echosignals besteht die folgende Beziehung:

$$\Delta T = ( f_s\ /\ \Delta f\ ) \Delta t. \tag{1}$$

wobei:

$\Delta T$    die zeitliche Differenz zwischen zwei Punkten des Zwischenfrequenzsignals,

$\Delta t$    die tatsächliche zeitliche Differenz zwischen den zugehörigen Punkten des Echosignals,

$f_s$    die Sende-Wiederholrate und

Δf      die Frequenzdifferenz ($f_s$ - $f_r$ von Sende-Wiederholrate

$f_r$      und Referenz-Wiederholrate $f_r$ und bedeuten

und $f_s$ /Δf gleich dem Zeitdehnungsfaktor ist.

Die Genauigkeit der Füllstandsmessung hängt folglich davon ab, wie genau die Größen ΔT, $f_s$ und Δf bekannt sind.

Es ist eine Aufgabe der Erfindung, ausgehend von dem vorgenannten Stand der Technik ein mit Mikrowellen arbeitendes Füllstandsmeßgerät anzugeben, das für hochgenaue Messungen geeignet ist.

Dies wird erfindungsgemäß gelöst durch ein mit Mikrowellen arbeitendes Füllstandsmeßgerät gemäß Anspruch 1.

Dadurch, daß die Abtastung des Differenzsignals und die Abtastung des Zwischenfrequenzsignals auf der gleichen Zeiteinheit basieren, ist eine zu bestimmende tatsächliche Laufzeit vollständig unabhängig von Schwankungen oder Änderungen dieser Zeiteinheit. Effekte wie z.B. temperaturabhängige Schwankungen der Frequenz eines die Zeiteinheit bestimmenden Bauelements haben keinen Einfluß auf die Meßgenauigkeit.

Gemäß einer Ausgestaltung der Erfindung ist ein einziger Taktgeber vorgesehen, der die feste Zeiteinheit vorgibt.

Gemäß einer weiteren Ausgestaltung umfaßt der Sende-ImpulsGenerator:

     einen Oszillator, dessen Frequenz gleich der Sende - Wiederholrate ist,
     - einen dem Oszillator nachgeschalteten Pulsgenerator,

         -- der ein Ausgangssignal des Oszillators in ein Steuersignal umwandelt, und

         -     eine von den Steuersignalen angesteuerte Mikrowellen-Quelle, die die Mikrowellenpulse aussendet.

Gemäß einer weiteren Ausgestaltung umfaßt der Referenzimpuls-Generator:

-      einen Oszillator, dessen Frequenz gleich der Referenz-Wiederholrate ist,
-      einen dem Oszillator nachgeschalteten Pulsgenerator,

         -- der ein Ausgangssignal des Oszillators in ein Steuersignal umwandelt, und

-      eine von den Steuersignalen angesteuerte Mikrowellen-Quelle, die die Mikrowellenpulse aus sendet.

Gemäß einer weiteren Ausgestaltung umfaßt die erste Teilschaltung zur Abtastung des Zwischenfrequenzsignals eine Abtast-Halte-Schaltung und einen mit einem Ausgang der Abtast-Halte-Schaltung verbundenen Analog-Digital-Wandler.

Gemäß einer Weiterbildung umfaßt die zweite Teilschaltung zur Abtastung des Differenzsignals:

-      einen Komparator,

         -- an dessen Ausgang ein Signal mit einem ersten Signalpegel anliegt, wenn das Differenzsignal zum Abtastzeitpunkt größer als ein vorgegebener Schwellwert ist und
         -- an dessen Ausgang ein Signal mit einem zweiten Signalpegel anliegt, wenn das Differenzsignal zum Abtastzeitpunkt kleiner als ein vorgegebener Schwellwert ist,

-      einen an Komparator angeschlossenen Flankendetektor,

         -- der den Beginn einer Periode des Differenzsignals erkennt, und

-      einen Zähler,

         -- der während einer vorgegebenen Anzahl von Perioden des Differenzsignals die Anzahl der der verstreichenden Zeiteinheiten zählt.

Gemäß einer weiteren Weiterbildung sind Mittel vorgesehen, die dazu dienen den Zählerstands nach Ablauf der vorgegebenen Anzahl von Perioden des Differenzsignals auszulesen und daraus die Periodendauer der Frequenzdifferenz zu bestimmen.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1     zeigt ein auf einen Behälter montiertes Füllstandsmeßgerät;

Fig. 2     zeigt einen Schaltungsaufbau eines erfindungsgemäßen Füllstandsmeßgeräts;

Fig. 3     zeigt ein Ausführungsbeispiel einer Abtast-Halte-Schaltung von Fig. 2;

Fig. 4     zeigt eine Aufzeichnung eines Beispiels für ein Zwischenfrequenzsignal ZF;

Fig. 5     zeigt ein Beispiel eines Differenzsignals D, für den Fall, daß die Ausgangssignale der Pulsgeneratoren von Fig. 2 zur Bildung des Differenzsignals D verwendet werden; und

Fig. 6     zeigt ein Beispiel eines Differenzsignals D, für den Fall, daß die Ausgangssignale der Oszillatoren Fig. 2 zur Bildung des Differenzsignals D verwendet werden.

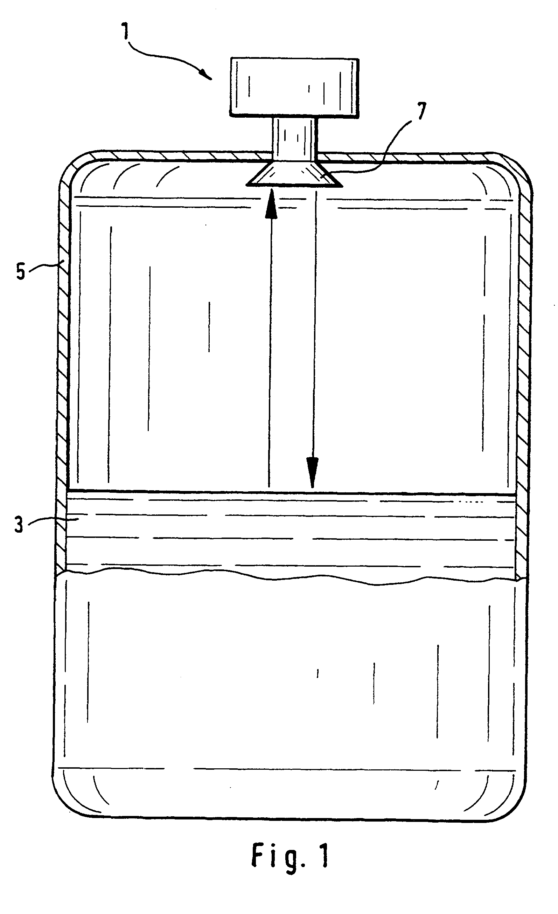

In Fig. 1 ist ein mit Mikrowellen arbeitendes Füllstandsmeßgerät 1 dargestellt, das auf einem mit einem Füllgut 3 gefüllten Behälter 5 montiert ist. Das Füllstandsmeßgerät 1 weist eine Antenne 7 auf, über die es im Betrieb Mikrowellenpulse in Richtung der Füllguts, dessen Füllstand zu messenden ist, sendet. Die gesendeten Mikrowellenpulse werden an einer Füllgutoberfläche reflektiert und deren Echosignale empfangen. Der Weg den die Mikrowellenpulse im Betrieb zurücklegen ist durch Pfeile dargestellt.

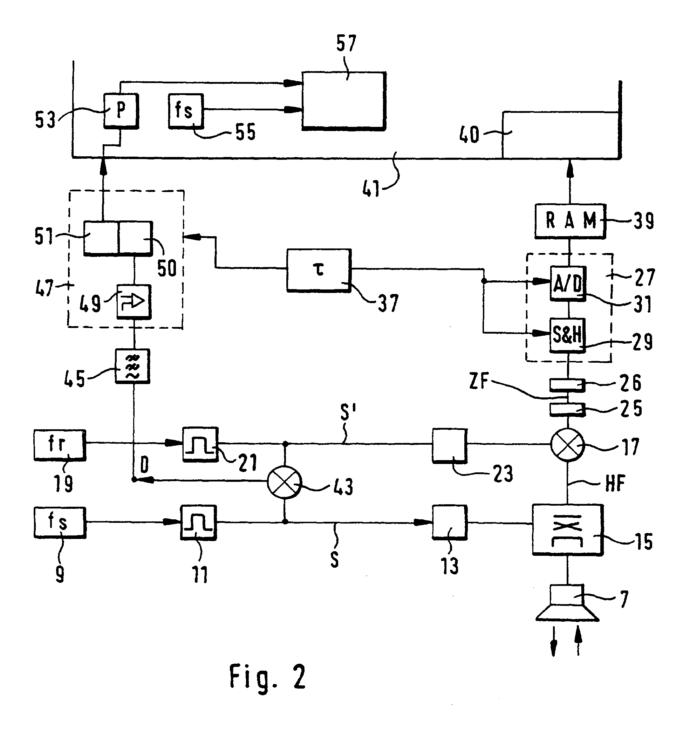

Fig. 2 zeigt ein Ausführungsbeispiel eines Schaltungsaufbau eines erfindungsgemäßen Füllstandsmeßgeräts.

Es ist ein Sendeimpuls-Generator zur Erzeugung von Mikrowellenpulsen mit einer Sende-Wiederholrate $f_s$ vorgesehen. Dieser umfaßt einen Oszillator 9, dessen Frequenz gleich der Sende-Wiederholrate $f_s$ ist. Der Oszillator 9 ist z.B. ein Quarzoszillator mit einer hohen Frequenzstabilität. Dem Oszillator 9 ist ein Pulsgenerator 11 nachgeschaltet. Dieser wandelt ein Ausgangssignal des Oszillators 9 in ein Steuersignal S um. Das Steuersignal S hat z.B. die Form von kurzen Reckpulsen. Mit dem Steuersignal S wird eine Mikrowellenquelle 13, z.B. eine Gunndiode, angesteuert, die entsprechend Mikrowellenpulse aussendet. Das Steuersignal S kann z.B. in Form eines Triggersignals zugeführt werden, durch das die Mikrowellenquelle 13 ein- und ausgeschaltet wird. Alternativ kann die Mikrowellenquelle 13 permanent eingeschaltet sein und eine Torschaltung vorgesehen sein, die in Abhängigkeit von dem Steuersignal S öffnet oder sperrt. Die Periodendauer des Steuersignals S ist gleich dem Kehrwert der Sende-Wiederholrate Das Steuersignal S wäre in diesem Fall eine Serie von Rechteckpulsen und die Dauer der Rechteckpulse ist gleich der Dauer der Mikrowellenpulse und beträgt z.B. eine Nanosekunde. Die Sende-Wiederholrate $f_s$ beträgt z.B. einige Megahertz. Die ausgesendeten Mikrowellenpulse werden über einen Richtkoppler 15 auf die Antenne 7 übertragen und in den Behälter 5 gesendet.

Das Echosignal wird über die Antenne 7 aufgenommen und liegt über den Richtkoppler 15 an einem ersten Eingang eines Mischers 17 an. Genausogut sind natürlich statt einer einzigen Antenne zum Senden und zum Empfangen zwei Antennen einsetzbar, von denen eine zum Senden und eine zum Empfangen dient.

Zusätzlich ist ein Referenzimpuls-Generator vorgesehen. Dieser dient zur Erzeugung von Mikrowellenpulsen, die identisch zu den vom Sendeimpuls-Generator erzeugten Mikrowellen-Pulsen sind, jedoch eine Referenz-Wiederholrate $f_r$ aufweisen, die um eine geringe Frequenzdifferenz $\Delta f$ von der Sende-Wiederholrate $f_s$ verschieden ist. Die Frequenzdifferenz beträgt einige Hertz, z.B. 40 Hertz. Der Referenzimpuls-Generators ist analog zu dem Sendeimpuls-Generator aufgebaut. Es weist einen Oszillator 19 auf, dessen Frequenz gleich der Referenz-Wiederholrate $f_r$ ist. Dem Oszillator 19 ist ein Pulsgenerator 21 nachgeschaltet, der ein Ausgangssignal des Oszillators 19 in ein Steuersignal S' umwandelt und es ist eine von dem Steuersignal S' angesteuerte Mikrowellen-Quelle 23 vorgesehen, die die Mikrowellenpulse aussenden.

Das Ausgangssignal des Referenzpuls-Generators liegt an einem zweiten Eingang des Mischers 17 an. Am Ausgang des Mischers 17 liegt ein Zwischenfrequenzsignal ZF. Damit durch die vom Referenzimpuls-Generator erzeugten Mikrowellenpulse eine zeitrichtige Abtastung des Echosignals erfolgt ist die Referenz-Wiederholrate $f_r$ geringer als die Sende-Wiederholrate $f_s$ anzusetzen. Das Zwischenfrequenzsignal ZF ist gegenüber dem Echosignal zeitlich um einen Zeitdehnungsfaktor, der gleich einem Quotient aus Sende-Wiederholrate $f_s$ und Frequenzdifferenz $\Delta f$ ist, gedehnt.

Bei einer Sende-Wiederholrate von einigen Megahertz, einer Frequenzdifferenz von z.B. 10 Hz bis 100 Hz und einer Mikrowellenfrequenz von einigen Gigahertz liegt die Frequenz des Zwischenfrequenzsignals unterhalb 100 kHz. Dem Mischer 17 ist ein Tiefpaß 25 nachgeschaltet, der die gewünschten Frequenzen des Zwischenfrequenzsignals ZF durchläßt und vor allem für Frequenzen im Gigahertzbereich undurchlässig ist. Typischerweise beträgt die Grenzfrequenz eines solchen Filters einige hundert Kilohertz. Das gefilterte Zwischenfrequenzsignal ZF ist einem Demodulator 26 zugeführt. Dies kann z.B. ein einfacher Gleichrichter sein.

Das gefilterte und demodulierte Zwischenfrequenzsignal ZF ist einer ersten Teilschaltung 27 zugeführt, die zur Abtastung des Zwischenfrequenzsignals ZF dient.

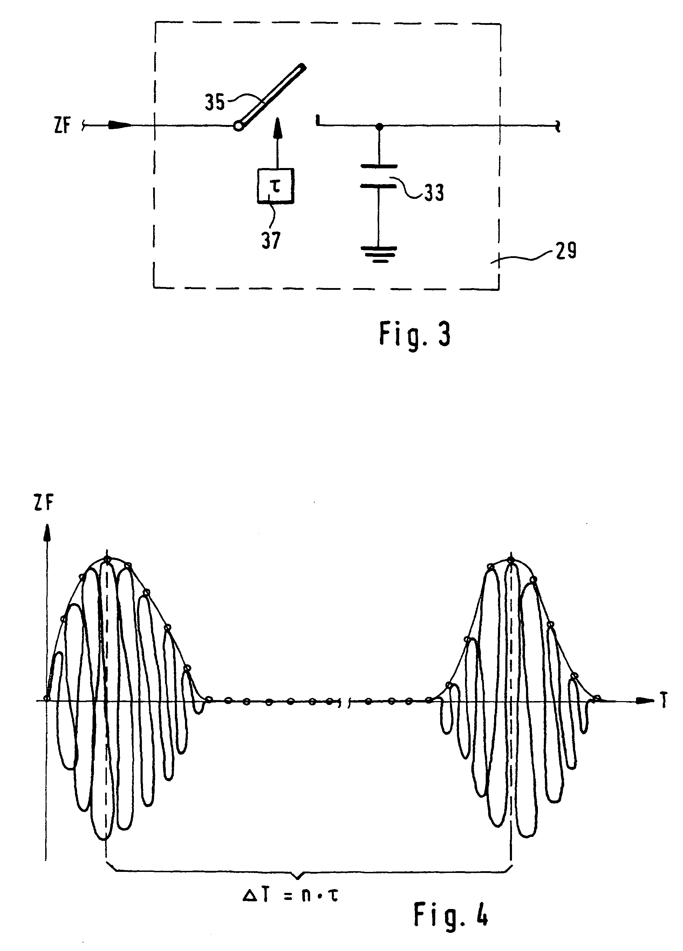

Bei dem gezeigten Ausführungsbeispiel erfolgt die Abtastung mittels einer Abtast-Halte Schaltung 29 und einem Analog-Digital-Wandler 31. Die einfachste Form einer Abtast-Halte-Schaltung ist in Fig. 3 dargestellt. Sie weist einen Kondensator 33 mit einem vorgeschalteten Schalter 35 auf. Ist der Schalter 35 geschlossen, so wird der Kondensator 33 entsprechend dem anliegenden Zwischenfrequenzsignal ZF geladen. Anschließend wird der Schalter 35 geöffnet und die zuletzt am Kondensator 33 anliegende Spannung wird analog-digital gewandelt. Der so erhaltene Abtastwert entspricht der Amplitude des Zwischenfrequenzsignal ZF zu dem Zeitpunkt, an dem der Schalter 35 geöffnet wurde.

Es ist ein Taktgeber 37 vorgesehen, der eine Zeiteinheit $\tau$ vorgibt mit der die Abtast-Halteschaltung 29 und der Analog-Digital-Wandler 31 getaktet sind. Der zeitliche Abstand zwischen zwei Schalteröffnungen beträgt eine Zeiteinheit $\tau$. Entsprechend ist der zeitliche Abstand zwischen zwei aufeinanderfolgenden Abtastungen des Zwischenfrequenzsignals ZF gleich einer Zeiteinheit $\tau$. Die digitalen Abtastwerte werden in einem Speicher 39, z.B. einem Random Access Memory, abgelegt.

Fig. 4 zeigt ein Beispiel einer so erstellten Aufzeichnung des Zwischenfrequenzsignals ZF. Es ist die Amplitude des Zwischenfrequenzsignals ZF als Funktion der Zeit T aufgetragen, wobei der Abstand zwischen zwei durch Punkte dargestellten Abtastwerten jeweils eine Zeiteinheit $\tau$ beträgt. Die Aufzeichnung zeigt zwei deutliche Maxima. Das erste Maximum ist einem Anteil eines gesendeten Mikrowellenpulses zuzuordnen, der über den Richtkoppler 15 direkt zum Mischer 17 gelangt. Das zweite Maximum ist dem gesendeten und an der Füllgutoberfläche reflektierten Anteil desselben Mikrowellenimpulses zuzuordnen.

Natürlich kann auch der zeitliche Abstand zwischen anderen markanten Punkten des Echosignals bzw. des Zwischenfrequenzsignals ZF relevant sein. Aufbau und Auswertung unterscheiden sich von dem nachfolgend beschriebenen dann lediglich in dem Mitteln, die zur Erkennung der markanten Punkte vorzusehen sind.

Es ist eine Auswerteeinheit 41 vorgesehen, die aus den gespeicherten Abtastwerten die Position der beiden Maxima bestimmt und deren zeitlichen Abstand ermittelt. Dies erfolgt z.B. mittels einer Recheneinheit 40. Der zeitliche Abstand $\Delta T$ zwischen diesen beiden Maxima ist ein Vielfaches n der Zeiteinheit $\tau$. Aus dem zeitlichen Abstand $\Delta T$ ist mittels des Zeitdehnungsfaktors die tatsächliche Laufzeit l des Mikrowellenpulses bestimmbar.

Wie bereits beschrieben ist der Zeitdehnungsfaktor gleich dem Quotient aus Sende-Wiederholrate $f_s$ und Frequenzdifferenz $\Delta f$ und die Genauigkeit der Messung hängt wesentlich von dieser Größe ab.

Es sind Mittel zur Erzeugung eines Differenzsignals D, vorgesehen, das sich mit der Frequenzdifferenz $\Delta f$ ändert. Diese Mittel umfassen einen zweiten Mischer 43, an dessen erstem Eingang ein Signal anliegt, das sich mit der Sende-Wiederholrate $f_r$ ändert und an dessen zweitem Eingang ein Signal anliegt, das sich mit der Referenz-Wiederholrate $f_r$ ändert. Das Ausgangssignal des Mischers 43 enthält das Differenzsignal D und deutlich höherfrequente Signale. Es liegt an einem Tiefpaß 45 an, der die höherfrequenten Signale herausfiltert und an dessen Ausgang das reine Differenzsignal D zur Verfügung steht.

Als Eingangssignale können an den Mischer 43 z.B. die Ausgangssignale der beiden Oszillatoren 9 und 19 anliegen. Es können aber auch, wie in dem Ausführungsbeispiel von Fig. 2 gezeigt, die Ausgangssignale der beiden Pulsgeneratoren 11 und 21 verwendet werden.

Es ist eine zweite Teilschaltung 47 zur Abtastung des Differenzsignals D und zur Bestimmung von dessen Periodendauer P vorgesehen. Dabei ist der zeitliche Abstand zwischen zwei aufeinanderfolgenden Abtastungen des Differenzsignals D ebenfalls gleich der Zeiteinheit $\tau$.

Vorzugsweise ist nur ein einziger Taktgeber 37 vorgesehen ist, der die feste Zeiteinheit $\tau$ vorgibt. Alternativ können jedoch auch zwei oder mehr Taktgeber vorgesehen sein, die von einem einzigen Basistaktgeber abgeleitet sind und sich identisch Verhalten, d.h. deren z.B. durch Schwankungen der Umgebungstemperatur bedingte Abweichungen von einem Solltakt übereinstimmen.

In dem in Fig. 2 dargestellten Ausführungsbeispiel umfaßt die zweite Teilschaltung 47 einen Komparator 49, an dem das Ausgangssignal des Tiefpasses 45 anliegt. Am Ausgang des Komparators 49 liegt ein Signal mit einem ersten Signalpegel H an, wenn das Differenzsignal D zum Abtastzeitpunkt größer als ein vorgegebener Schwellwert W ist und es liegt ein Signal mit einem zweiten Signalpegel L an, wenn das Differenzsignal D zum Abtastzeitpunkt kleiner als der vorgegebener Schwellwert W ist.

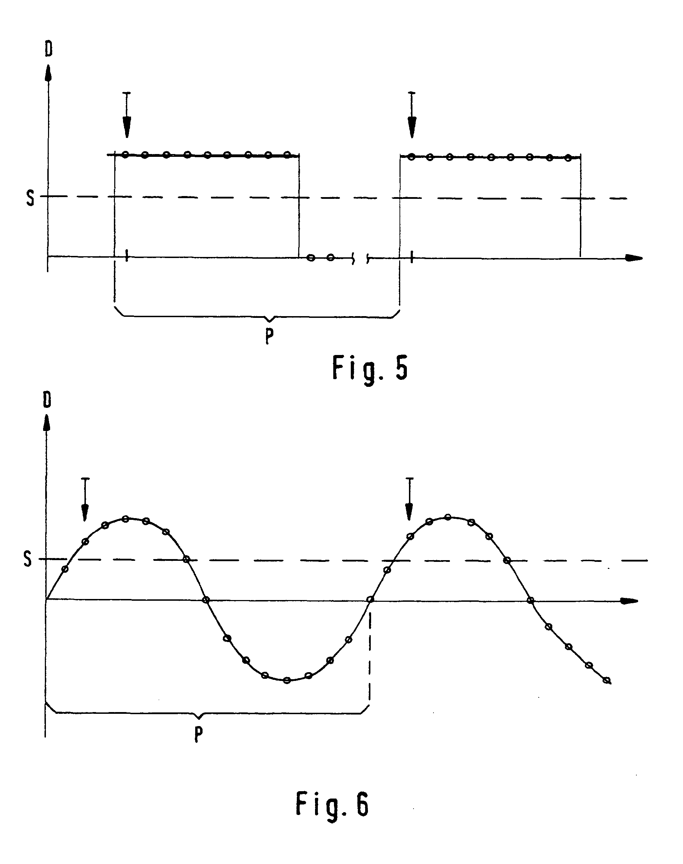

Fig. 5 zeigt ein Beispiel eines Differenzsignals D, das wie oben beschrieben erzeugt wird, wenn die Ausgangssignale der Pulsgeneratoren zur Bildung des Differenzsignals D verwendet werden und die Pulsgeneratoren Serien von Reckteckpulsen liefern.

Fig. 6 zeigt ein Beispiel eines Differenzsignals D, das wie oben beschrieben erzeugt wird, wenn die Ausgangssignale der Oszillatoren 9, 19 zur Bildung des Differenzsignals verwendet.

Es ist jeweils der Schwellwert W eingezeichnet und die Abtastungen sind durch Punkte dargestellt. Der Schwellwert W ist ein beliebiger fest eingestellter Wert, der größer als der kleinste und kleiner als der größte auftretende Wert des Differenzsignals D ist.

An den Komparator 49 ist ein Flankendetektor 50 angeschlossen, der den Beginn einer Periode P des Differenzsignals D erkennt. Dies geschieht z.B. indem jeweils zwei aufeinanderfolgend am Ausgang des Komparators 49 anstehende Signalpegel verglichen werden. Hierzu kann z.B. das Ausgangssignal des Komparators 49 einmal direkt und einmal über eine Verzögerungsleitung, die eine Verzögerung um eine Zeiteinheit $\tau$ erzeugt, an je einem Eingang eines Nicht-Unds anliegt. Jedes zweite mal, wenn die Nicht-Und-Bedigung erfüllt ist beginnt eine neue Periode. So kann z.B. immer wenn ein erster Signalpegel H auf einen zweiten Signalpegel L folgt, der Beginn einer neuen Periode P vorliegen. Dieser Periodenbeginn ist in den Figuren 5 und 6 durch Pfeile angezeigt.

Es ist ein Zähler 51 vorgesehen, der während einer vorgegebenen Anzahl x von Perioden des Differenzsignals D die Anzahl m der verstreichenden Zeiteinheiten zählt. Es wird z.B. von dem Flankendetektor 50 ein erstes Signal ausgegeben, das den Zähler 51 mit einem Periodenbeginn startet und ein zweites Signal aufgegeben, das den Zähler 51 nach Ablauf der vorgegebenen Anzahl x, d.h. mit dem Beginn der x+1 Periode stoppt. Es kann z.B. ein in Fig. 2 nicht dargestellter Microcontroller zum Auslesen des Zählerstandes vorgesehen sein. Dieser kann z.B. in der zweiten Teilschaltung 47 oder in der Auswerteeinheit 41 angeordnet sein.

Der Zählerstand m ist eine ganze Zahl und gibt die Dauer von x Perioden in der Zeiteinheit $\tau$ an. Entsprechend ist die Periodendauer P gegeben durch:

$$P = (1/x)\ m\ \tau$$

Die Dauer von x Perioden wird auf diese Weise mit der Genauigkeit $\tau$ bestimmt. Der relative Fehler der Periodendauer P ist:

$$\Delta P/P = \Delta\ (xP)/(xP) = \tau/(m\ \tau)$$

Da die Zeiteinheit $\tau$ vorgegeben ist, ist die Genauigkeit mit der die Periodendauer P gemessen wird durch die Anzahl x der Perioden über die gemessen wird festgelegt. Der Zählerstand m ist gleich einem Produkt von der Anzahl x der Perioden und einer Anzahl Zeiteinheiten $\tau$ pro Periodendauer P.

Sofern die Umgebungsbedingungen, wie z.B. die Temperatur, die einen Einfluß auf die Frequenzstabilität der Oszillatoren 9, 19 ausüben, sich nur langsam ändern genügt es, die Bestimmung der Periodendauer P in regelmäßigen zeitlichen Abständen vorzunehmen, die klein sind gegenüber der Zeitskala, auf der sich die Umgebungsbedingungen ändern.

Die gemessene Periodendauer P wird in die Auswerteeinheit 41 übertragen. Dort wird sie z.B. in einem Speicher 53 abgelegt, dessen Inhalt mit jeder neuen Messung der Periodendauer P aktualisiert wird. Es ist ein weiterer Speicher 55 in der Auswerteeinheit 41 vorgesehen, in dem die Sende-Wiederholrate $f_s$ abgelegt ist. Dieser Wert wird werkseitig eingespeichert und nachfolgend nicht mehr geändert.

In der Auswerteeinheit 41 ist eine Recheneinheit 57 angeordnet, die aus der Periodendauer P den Zeitdehnungsfaktor in der Zeiteinheit $\tau$ bestimmt. Da die Periodendauer P gleich dem Kehrwert der Frequenzdifferenz $\Delta f$ ist, ist der Zeitdehnungsfaktor gleich dem Produkt aus Sende-Wiederholrate $f_s$ und Periodendauer P. Die Periodendauer P liegt bereits in der gewünschten Einheit vor, so daß sich für den Zeitdehnungsfaktor ergibt:

$$f_s\ /\ \Delta f = f_s\ P = f_s\ (1/x)\ m\ [\tau]$$

Mittels dieses Zeitdehnungsfaktor in der Zeiteinheit $\tau$ wird in der Auswerteeinheit 41, z.B. in der Recheneinheit 57, aus einem in der Zeiteinheit $\tau$ vorliegenden zeitlichen Abstand $\Delta T$ zwischen zwei Abtastpunkten des Zwischenfrequenzsignals ZF ein tatsächlicher zeitlicher Abstand $\Delta t$ zwischen zwei den zwei Abtastpunkten entsprechenden Punkten des Echosignals bestimmt.

Dies ist nachfolgend anhand des in Fig. 4 dargestellten Beispiels des Zwischenfrequenzsignals ZF erläutert. Natürlich können die beiden Abtastpunkte, für die der tatsächliche zeitliche Abstand zu bestimmen ist auch anderen markanten Punkten des Echosignals, z.B. dem Abstand zwischen Antenne und einem von einem Referenzreflektor erzeugten Echo, entsprechen.

Wie zuvor beschrieben entspricht die Laufzeit des Mikrowellenpulses dem zeitlichen Abstand $\Delta T = n\,\tau$ zwischen den beiden Maxima des Zwischenfrequenzsignals ZF von Fig. 4. Dieser zeitliche Abstand $\Delta T$ entspricht einem tatsächlichen zeitlichen Abstand $\Delta t$ zwischen den beiden zugehörigen Punkten des Echosignals, der gleich der Laufzeit 1 des entsprechenden Mikrowellenpulses ist.

Der Abstand H zwischen dem Behälterboden und dem Füllstandsmeßgerät wird als bekannt vorausgesetzt. Aus der tatsächlichen Laufzeit l eines Mikrowellenpulses von der Antenne 7 zur Füllgutoberfläche und zurück ist der Füllstand h somit unter Einbeziehung der Ausbreitungsgeschwindigkeit c von Mikrowellen zu:

$$h = H - (c\ l)/2$$

Es gilt:

$$\Delta T = n\ \tau\ =\ (\ f_s\ /\ \Delta f\ )\ \Delta t$$

$$= fs\ P\ \Delta T$$

$$= f_s\ m/x\ \tau\ \Delta t$$

Für die gesuchte tatsächliche Zeitdifferenz zwischen Sende-und Empfangspuls ergibt sich:

$$\Delta T = x\ (n/m)\ f_s$$

Das Ergebnis ist unabhängig von der Zeitkonstanten $\tau$. Ein Fehler in der Zeitkonstanten und/oder deren Änderung über die Temperatur oder die Zeit wirken sich nicht auf die Meßgenauigkeit aus. Die einzige Fehlerquelle die in diese Gleichung eingeht ist ein Fehler in der Sende-Wiederholrate $f_s$. Durch die Verwendung eines sehr frequenzstabilen Quarzoszillator kann dieser Fehler sehr gering gehalten werden. Es sind Oszillatoren mit einem relativen Fehler von $\Delta f/f < 10^{-6}$ erhältlich.

Natürlich geht die Zeitkonstante $\tau$ noch insofern ein, als sie die Genauigkeit der Abtastung festlegt. Ein Mikrowellenpuls benötigt für eine Strecke s von einem Millimeter eine Laufzeit von $t_s = s/c$, wobei c die Ausbreitungsgeschwindigkeit des Mikrowellenpulses ist, die etwa gleich der Vakuumlichtgeschwindigkeit von $c \cong 3\ 10^8$ m/s ist. Die Laufzeit $t_s$ ist daher ungefähr gleich $t_s \cong 3\ 10^{-12}$ s. Bei einer Sende-Wiederholrate $f_s$ von 4 Mhz und einer Frequenzdifferenz $\Delta f$ von 40 Hz ist der Zeitdehnungsfaktor gleich $10^5$. Damit eine Zeitdifferenz $\Delta T$ des Zwischenfrequenzsignals ZF aufgelöst werden kann, die einer Füllstandsänderung von einem halben Millimeter entspricht, muß bei diesem Zahlenbeispiel die Zeiteinheit $\tau$ so gewählt sein, daß eine Verschiebung des von der Reflexion an der Füllgutoberfläche bedingte Maximum des Zwischenfrequenzsignals ZF um $10^{-7}$ s aufgelöst werden kann. Dies kann dadurch geschehen, daß die Zeiteinheit $\tau$ entsprechend klein angesetzt wird oder aber indem die Erkennung der Lage des Maximums, z.B. durch Auswertung der Form des Zwischenfrequenzsignals ZF und/oder durch Mittelung über mehrere Zwischenfrequenzsignale ZF verbessert ist. Die Zeiteinheit kann dadurch z.B. auf einen Wert $10^{-6}$ s reduziert werden. Dies entspricht einer Frequenz von einem Megahertz.

Es wird erfindungsgemäß die gleiche Zeiteinheit $\tau$ auch für die Auszählung der Periodendauer P des Differenzsignals eingesetzt. Bei einer Frequenzdifferenz $\Delta f$ von 40 Hertz beträgt die Periodendauer P $25\ 10^{-3}$ s. Obwohl die Zeitskala auf der sich das Differenzsignal D ändert sich deutlich von der Zeitskala auf der sich das Zwischenfrequenzsignal ZF ändert unterscheidet, ist es wie oben beschrieben erfindungsgemäß möglich für die Abtastung beider Signale die gleiche Zeiteinheit $\tau$ zu verwenden. Die Zeiteinheit $\tau$ wird durch die von der Anwendung vorgegebene Genauigkeit für die Laufzeitbestimmung festgelegt. Die Genauigkeit der Bestimmung der Periodendauer P des Differenzsignals D ist dann durch die Anzahl x der Perioden über die das Differenzsignal D ausgewertet wird einzustellen.

**Patentansprüche**

1. Mit Mikrowellen arbeitendes Füllstandsmeßgerät welches umfaßt:

   - einen Sendeimpuls-Generator zur Erzeugung von Mikrowellen-Pulsen mit einer Sende-Wiederholrate ($f_s$), die im Betrieb mittels einer Antenne (7) in Richtung eines zu messenden Füllstandes gesendet, an einer Füllgutoberfläche reflektiert und deren Echosignal empfangen wird,
   - einen Referenzimpuls-Generator zur Erzeugung von Mikrowellen-Pulsen, die identisch zu den vom Sendeimpuls-Generator erzeugten Mikrowellen-Pulsen sind, jedoch eine Referenz-Wiederholrate ($f_r$) aufweisen, die um eine geringe Frequenzdifferenz ($\Delta f$) von der Sende-Wiederholrate ($f_s$) verschieden ist,
   - einen ersten Mischer (17)

      -- an dessen erstem Eingang das Echosignal anliegt
      -- an dessen zweitem Eingang ein Ausgangssignal des Referenzimpuls-Generators anliegt,

   und
   - an dessen Ausgang ein gegenüber dem Echosignal zeitlich um einen Zeitdehnungsfaktor, der gleich einem Quotient aus Sende-Wiederholrate ($f_s$) und der Frequenzdifferenz ($\Delta f$) ist, gedehntes Zwischenfrequenzsignal (ZF) anliegt,

   **dadurch gekennzeichnet, daß**

   - eine erste Teilschaltung (27) zur Abtastung des Zwischenfrequenzsignals (ZF) vorgesehen ist,

      -- bei der der zeitliche Abstand zwischen zwei aufeinanderfolgenden Abtastungen gleich einer Zeiteinheit ($\tau$) ist, und

   - Mittel zur Erzeugung des Differenzsignals (D) vorgesehen sind, die einen zweiten Mischer (43) umfassen,

      -- an dessen erstem Eingang ein Signal anliegt,

         --- das sich mit der Sende-Wiederholrate ($f_s$) ändert und

      -- an dessen zweitem Eingang ein Signal anliegt,

         --- das sich mit der Referenz-Wiederholrate ($f_r$) ändert und
         --- an dessen Ausgang das Differenzsignal (D) ansteht, das sich mit der Frequenzdifferenz ($\Delta f$) ändert, und

   - eine zweite Teilschaltung (47) zur Bestimmung von dessen Periodendauer (P) auf der Basis der Zeiteinheit ($\tau$), und
   - einer Auswerteeinheit (41)

      -- die aus der Periodendauer (P) den Zeitdehnungsfaktor in der Zeiteinheit ($\tau$) bestimmt, und
      -- die mittels dieses Zeitdehnungsfaktors in der Zeiteinheit ($\tau$) aus einem in der Zeiteinheit ($\tau$) vorliegenden zeitlichen Abstand ($\Delta T$) zwischen zwei Abtastpunkten des Zwischenfrequenzsignals (ZF) einen tatsächlichen zeitlichen Abstand ($\Delta t$) zwischen zwei den zwei Abtastpunkten entsprechenden Punkten des Echosignals bestimmt.

2. Füllstandsmeßgerät nach Anspruch 1, bei dem ein einziger Taktgeber (37) vorgesehen ist, der die feste Zeiteinheit ($\tau$) vorgibt.

3. Füllstandsmeßgerät nach Anspruch 1, bei dem der Sendeimpuls-Generator umfaßt:

   - einen Oszillator (9) dessen Frequenz gleich der Sende-Wiederholrate ($f_s$) ist,
   - einen dem Oszillator (9) nachgeschalteten Pulsgenerator (11)

      -- der ein Ausgangssignal des Oszillators (9) in ein Steuersignal (5) umwandelt, und

- eine von den Steuersignalen (S) angesteuerte Mikrowellen-Quelle (13) die die Mikrowellenpulse aussendet.

**4.** Füllstandsmeßgerät nach Anspruch 1, bei dem der Referenzimpuls-Generator umfaßt:

- einen Oszillator (19) dessen Frequenz gleich der Referenz-Wiederholrate ($f_r$) ist,
- einen dem Oszillator (19) nachgeschalteten Pulsgenerator (21),

-- der ein Ausgangssignal des Oszillators (19) in ein Steuersignal (S) umwandelt, und

- eine von den Steuersignalen (S') angesteuerte Mikrowellen-Quelle (23), die die Mikrowellenpulse aussendet.

**5.** Füllstandsmeßgerät nach Anspruch 1, bei dem die erste Teilschaltung (27) zur Abtastung des Zwischenfrequensignals (ZF) eine Abtast-HalteSchaltung (29) und einen mit einem Ausgang der Abtast-Halte-Schaltung (29) verbundenen Analog-Digital-Wandler (31) umfaßt.

**6.** Füllstandsmeßgerät nach Anspruch 1, bei dem die zweite Teilschaltung (47) zur Abtastung des Differenzsignals (D) umfaßt:

- einen Komparator (49)

-- an dessen Ausgang ein Signal mit einem ersten Signalpegel (H) anliegt, wenn das Differenzsignal (D) zum Abtastzeitpunkt größer als ein vorgegebener Schwellwert (W) ist und
-- an dessen Ausgang ein Signal mit einem zweiten Signalpegel (L) anliegt, wenn das Differenzsignal (D) zum Abtastzeitpunkt kleiner als der vorgegebene Schwellwert (D) ist,

- einen an Komparator (49) angeschlossenen Flankendetektor (50),

-- der den Beginn einer Periode des Differenzsignals (D) erkennt, und

- einen Zähler (51)

-- der während einer vorgegebenen Anzahl (x) von Perioden des Differenzsignals (D) die Anzahl (m) der verstreichenden Zeiteinheiten ($\tau$) zählt.

**7.** Füllstandsmeßgerät nach Anspruch 6, bei dem Mittel vorgesehen sind, die dazu dienen den Zählerstands nach Ablauf der vorgegebenen Anzahl x von Perioden des Differenzsignals (D) auszulesen und daraus die Periodendauer (P) der Frequenzdifferenz ($\Delta f$) zu bestimmen.

**Claims**

**1.** Filling level measuring device operating with microwaves which comprises:

- a transmission pulse generator for generating microwave pulses at a transmission repetition rate ($f_s$), which, during operation, is [sic] transmitted by means of an antenna (7) in the direction of a filling level to be measured, reflected at a surface of the filling material and the echo signal thereof received,
- a reference pulse generator for generating microwave pulses identical to the microwave pulses generated by the transmission pulse generator, but having a reference repetition rate ($f_r$) which is different from the transmission repetition rate ($f_s$) by a small frequency difference ($\Delta f$),
- a first mixer (17),

-- at the first input of which the echo signal is present,
-- at the second input of which an output signal of the reference pulse generator is present,

and
- at the output of which an intermediate frequency signal (ZF) is present, which is extended in time with respect to the echo signal by a time dilation factor equal to a quotient of the transmission repetition rate ($f_s$) and the frequency difference ($\Delta f$),

**characterised in that**

- a first subcircuit (27) for sampling the intermediate frequency signal (ZF) is provided,

-- in which the time interval between two successive samplings is equal to a time unit ($\tau$), and

- means for generating the differential signal (D) are provided, which comprise a second mixer (43),

-- at the first input of which a signal is present,

--- which varies at the frequency repetition rate ($f_s$), and

-- at the second input of which a signal is present,

--- which varies at the reference repetition rate ($f_r$), and
--- at the output of which the differential signal (D) is present, which varies at the frequency difference ($\Delta f$), and

- a second subcircuit (47) for determining its period duration (P) on the basis of the time unit ($\tau$), and
- of [sic] an evaluation unit (41) [lacuna]

-- which determines the time dilation factor in the time unit ($\tau$) from the period duration (P), and
-- which, by means of this time dilation factor in the time unit ($\tau$), determines, from a time interval ($\Delta T$) present in the time unit ($\tau$) between two sampling points of the intermediate frequency signal (ZF), an actual time interval ($\Delta t$) between two points of the echo signal which correspond to the two sampling points.

2. Filling level measuring device according to Claim 1, in which there is provided a single clock-pulse generator (37) which presets the fixed time unit ($\tau$).

3. Filling level measuring device according to Claim 1, in which the transmission pulse generator comprises:

- an oscillator (9) having a frequency equal to the transmission repetition rate ($f_s$),
- a pulse generator (11) connected downstream of the oscillator (9),

-- which converts an output signal of the oscillator (9) into a control signal (5), and

- a microwave source (13) which is activated by the control signals (S) and emits the microwave pulses.

4. Filling level measuring device according to Claim 1, in which the reference pulse generator comprises:

- an oscillator (19) having a frequency equal to the reference repetition rate ($f_r$),
- a pulse generator (21) connected downstream of the oscillator (19),

-- which converts an output signal of the oscillator (19) into a control signal (S'), and

- a microwave source (23) which is activated by the control signals (S') and emits the microwave pulses.

5. Filling level measuring device according to Claim 1, in which the first subcircuit (27) for sampling the intermediate frequency signal (ZF) comprises a sample-and-hold circuit (29) and an analog/digital converter (31) connected to an output of the sample-and-hold circuit (29).

6. Filling level measuring device of Claim 1, in which the second subcircuit (47) for sampling the differential signal (D) comprises:

- a comparator (49),

-- at the output of which a signal at a first signal level (H) is present if the differential signal (D) at the sampling instant is greater than a preset threshold value (W), and

-- at the output of which a signal at a second signal level (L) is present if the differential signal (D) at the sampling instant is less than the preset threshold value (D),

- an edge detector (50) connected to comparator (49),

-- which detects the beginning of a period of the differential signal (D), and

- a counter (51)

-- which counts the number (m) of elapsing time units ($\tau$) during a preset number (x) of periods of the differential signal (D).

7. Filling level measuring device according to Claim 6, in which there are provided means which serve for reading out the counter reading after the preset number x of periods of the differential signal (D) have elapsed and for determining the period duration (P) of the frequency difference ($\Delta f$) therefrom.

**Revendications**

1. Transmetteur de niveau fonctionnant avec des micro-ondes, lequel comprend:

- un générateur d'impulsions d'émission destiné à la génération d'impulsions micro-ondes avec une fréquence de répétition d'émission ($f_s$), qui sont émises en fonctionnement au moyen d'une antenne (7) orientée en direction d'un produit à mesurer, sont réfléchies à la surface du produit et dont le signal d'écho est reçu,
- un générateur d'impulsions de référence destiné à la génération d'impulsions micro-ondes, qui sont identiques aux impulsions micro-ondes générées par le générateur d'impulsions d'émission, mais qui présentent toutefois une fréquence de répétition de référence ($f_r$), laquelle présente une petite différence de fréquence ($\Delta f$) avec la fréquence de répétition d'émission ($f_s$),
- un premier mélangeur (17),

-- à la première entrée duquel est appliqué le signal d'écho
-- à la deuxième entrée duquel est appliqué un signal de sortie du générateur d'impulsions de référence, et
-- à la sortie duquel est appliqué un signal de fréquence intermédiaire (ZF) dilaté temporellement par rapport au signal d'écho d'un facteur de dilatation temporelle égal au quotient entre la fréquence de répétition d'émission ($f_s$) et la différence de fréquence ($\Delta f$),

**caractérisé en ce que**

- un premier sous-circuit (27) est prévu pour l'échantillonnage du signal de fréquence intermédiaire (ZF),

-- pour lequel l'intervalle de temps entre deux échantillonnages consécutifs est égal à une unité de temps (T), et
-- des moyens sont prévus en vue de la génération du signal différentiel (D), qui comprennent un deuxième mélangeur (43),
-- à la première entrée duquel est appliqué un signal,

--- qui varie en fonction de la fréquence de répétition d'émission ($f_s$) et

-- à la deuxième entrée duquel est appliqué un signal

--- qui varie en fonction de la fréquence de répétition de référence ($f_r$) et

-- à la sortie duquel est disponible le signal différentiel (D), qui varie en fonction de la différence de fréquence ($\Delta f$), et

- un deuxième sous-circuit (47) destiné à la détermination de sa durée de période (P) sur la base de l'unité de temps (T) et
- une unité d'exploitation (41)

-- qui détermine à partir de la durée de période (P) le facteur de dilatation temporelle dans l'unité de temps (T), et

-- qui, au moyen de ce facteur de dilatation temporelle dans l'unité de temps (T), détermine un intervalle de temps effectif (Δt) entre deux points du signal d'écho correspondant à deux points d'échantillonnage, à partir d'un intervalle de temps (ΔT) entre deux points d'échantillonnage du signal de fréquence intermédiaire (ZF) disponible dans l'unité de temps (T).

2. Transmetteur de niveau selon la revendication 1, pour lequel est prévu un unique synchroniseur (37), qui définit l'unité de temps (T) fixe.

3. Transmetteur de niveau selon la revendication 1, pour lequel le générateur d'impulsions d'émission comprend :

- un oscillateur (9), dont la fréquence est égale à la fréquence de répétition d'émission ($f_s$),
- un générateur d'impulsions (11) placé en aval de l'oscillateur (9)

-- qui convertit un signal de sortie de l'oscillateur (9) en un signal de commande (S), et

- une source de micro-ondes (13) commandée par les signaux de commande (S), qui émet les impulsions micro-ondes.

4. Transmetteur de niveau selon la revendication 1, pour lequel le générateur d'impulsions de référence comprend :

- un oscillateur (19), dont la fréquence est égale à la fréquence de répétition de référence ($f_r$),
- un générateur d'impulsions (21) placé en aval de l'oscillateur (19)

-- qui convertit un signal de sortie de l'oscillateur (19) en un signal de commande (S'), et

- une source de micro-ondes (23) commandée par les signaux de commande (S'), qui émet les impulsions micro-ondes.

5. Transmetteur de niveau selon la revendication 1, pour lequel le premier sous-circuit (27) comprend, en vue de l'échantillonnage du signal de fréquence intermédiaire (ZF), un circuit échantillonneur-bloqueur (29) et un convertisseur analogique-numérique (31) relié à la sortie du circuit échantillonneur-bloqueur (29).

6. Transmetteur de niveau selon la revendication 1, pour lequel le deuxième sous-circuit (47) comprend, en vue de l'échantillonnage du signal différentiel (D) :

- un comparateur (49)

-- à la sortie duquel est appliqué un signal présentant un premier niveau de signal (H), lorsque le signal différentiel (D) à l'instant d'échantillonnage est supérieur à un seuil (W) prédéfini et
-- à la sortie duquel est appliqué un signal présentant un deuxième niveau de signal (L), lorsque le signal différentiel (D) à l'instant d'échantillonnage est inférieur à un seuil (W) prédéfini,

- un détecteur de front (50) connecté au comparateur (49),

-- qui détecte le début d'une période du signal différentiel (D), et

- un compteur (51),

-- qui compte le nombre (m) d'unités de temps (T) s'écoulant pendant un nombre (x) prédéfini de périodes du signal différentiel (D).

7. Transmetteur de niveau selon la revendication 6, pour lequel sont prévus des moyens, qui servent à lire la valeur du compteur après l'écoulement du nombre x prédéfini de périodes du signal différentiel (D), et à en déterminer la durée de période (P) de la différence de fréquence (Δf).

Fig. 1

Fig. 2

Fig. 3

$\Delta T = n \cdot \tau$

Fig. 4

Fig. 5

Fig. 6

**EP 0 955 527 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3107444 A